# EUROPEAN PATENT SPECIFICATION

(11) **EP 0 767 144 B1**
(45) Date of publication and mention of the grant of the patent: **24.01.2001**
(21) Application number: 95202690.4
(22) Date of filing: 06.10.1995
(51) Int. Cl.: C02F 3/04

(54) **Mini trickling filter for aerobic treatment of biological degradable waste water**
Mini Tropfkörper für aerobe Behandlung von biologisch abbaubarem Abwasser
Mini filtre bactérien pour le traitement aérobe des eaux résiduaires biodégradables

(43) Date of publication of application: 09.04.1997
(73) Proprietor: Van Gucht, Roland, ir., B-1851 Grimbergen (BE)
(72) Inventor: Van Gucht, Roland, ir., B-1851 Grimbergen (BE)

(56) References cited:
- DE-A- 2 332 218
- DE-A- 2 746 648
- US-A- 3 143 498
- US-A- 5 352 357

## Description

The invention is related to a small sized and prefabricated circular, square or rectangular trickling filter, which can be used as aerobic treatment of biological degradable wastewater.

There are known trickling filters which are not prefabricated and where the liquid wastewater is distributed over the top of the bed by a rotary distributor or by a fixed pipe system with spray nozzles and where the recirculation device is located outside the trickling filter.

The document DE-A-27 46 648 represents an apparatus for sewage treatment with trickling filter above the sedimentation tank ( 3 ). The circulation pump is installed in this sedimentation tank (3) and not in the trickling filter. The trickling filter is mounted above ground level. This separate tank (3) is used as sedimentation tank.

The document US-A-3 143 498 represents the same combined sewage treatment apparatus with trickling filter and sedimentation and with pump discharge pipes externally from the trickling filter part. This apparatus requires also an inspection chamber over all the surface of the apparatus.

In our application we apply the trickling filter with internally recirculation as such.

The object of the present invention is to execute the trickling filter in a closed prefabricated concrete, plastic or steel tank, with filter material, a supporting drain floor for this filter material, where the recirculation device consists of a central in the surrounding filter material placed tube in which an immersion pump is installed and equipped with her discharge pipe device and the regulation plate for the distribution of the water.

The treated wastewater below the supporting drain floor is distributed and recirculated above the filter material by an immersion pump, placed in a central in the surrounding filter material placed tube. This central tube ends below the minimum water level in the tank and ends on the other side above the filter material. The treated wastewater is pumped against a regulation plate so that the water is distributed over the total surface of the filter material. The plate is equipped with a mechanical regulation device so that the capacity and also the recycle ratio can be adjusted easily and also the capacity of the treated wastewater to the outlet.

A level switch controls the pump. With maximum level below the supporting drain floor the pump starts and she stops at the minimum level.

A fixation plate covers the central placed tube.

An air inlet pipe assures the necessary air for the aerobe function of the trickling filter ( with optional fan ) that just ends below the supporting drain floor, but above the maximum water level in the tank. The tank has an airtight access.

The advantages offered by the invention is that the mini trickling filter can be prefabricated in the factory of the manufacturer, can be installed completely under ground and directly connected to the existing sewerage by the client only by connecting the in- and outlet piping and the electrical cable.

The invention shall be explained below with the help of following drawings.

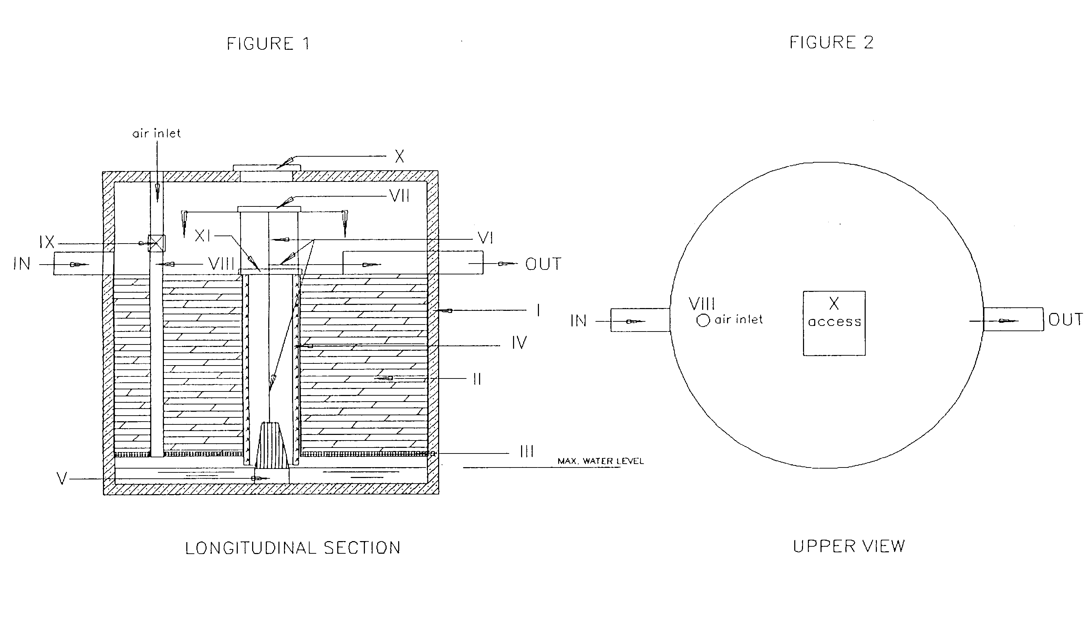

Drawing 1 is an assembling drawing of the mini trickling filter with longitudinal section ( figure 1 ) and upper view ( figure 2 ). In the figure 2 a circular tank is drawed, but a square or rectangular form is possible.

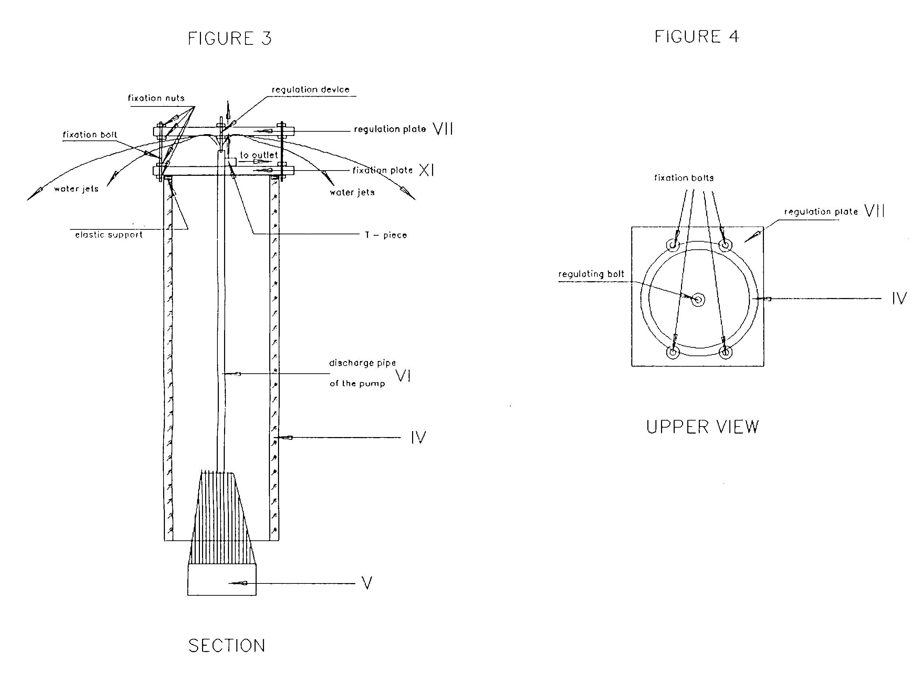

Drawing 2 illustrates the detail of the plate for the distribution of the water with the mechanical regulation device. Figure 3 shows a vertical section and figure 4 an upper view.

In the figure 4 a rectangular form for the plate is drawed, but another form is also possible. Also 4 fixation bolts are drawed but this quantity can be more or less.

With reference to drawings 1 and 2, reference numeral I denominates the prefabricated tank.

The filter material is denominated II, supporting drain floor III, the central placed tube IV, the immersion pump V, the discharge pipe with outlet system VI, the regulation plate with regulation device Vll, the air inlet pipe VIII with optional fan IX. If the natural ventilation of the sewage piping system is not sufficient, a fan IX can be installed in the air inlet pipe VII in order to force the air above the water level to pass through the filter material.

The operation principle of the mini trickling filter is the following.

The wastewater enters through the inlet piping IN to the trickling filter and passes by gravity through the filter material II and the supporting drain floor III to the bottom of the prefabricated tank I.

When the water level below the supporting drain floor III in the prefabricated tank I reaches the maximum water level then the level switch of the pump V starts the pump. At that moment the treated water is pumped through the pump discharge pipe VI against the regulation plate VII.

Due to the water velocity of the water stream against this plate VII water jets are formed which are dispersed over the total surface of the filter material II.

A certain amount of the pumped water is due to the pressure losses evacuated through the T-piece in the discharge pipe VI to the outlet OUT.

The amount of treated water to the outlet OUT can be regulated by the regulation device ( bolt or similar ) and the distance between the fixation plate XI and the regulation plate VII by the fixation bolts and nuts.

If the capacity at the inlet IN of the wastewater is smaller than the capacity to the outlet OUT, the water level below the supporting drain floor III drops. The pump V stops at the minimum water level.

The necessary air for the aerobe function of the trickling filter is assured by the air inlet pipe VIII ( with optional fan IX ). This pipe ends just below the supporting drain floor but above the maximum water level. The tank has an airtight access X.

The fixation plate XI is located above the central placed tube IV. The discharge pipe VI passes through the fixation plate XI.

If the natural ventilation of the sewage piping system is not sufficient, a fan IX can be installed in the inlet pipe VIII in order to force the air above the water level below the supporting drain floor III to pass through the filter material II.

## Claims

1. A mini trickling filter in a closed prefabricated concrete, plastic or steel tank, with filter material, a supporting drain floor for this filter material, where a recirculation device is provided consisting of a central in the surrounding filter material placed tube in which an immersion pump is installed.

2. A filter in accordance with claim 1, whereby the tube is provided with immersion pump, discharge pipe, fixation plate and regulation plate with regulation device for the regulating of the recycle and outlet ratio, with following features:
a. that the discharge pipe is placed within the tube
b. towards a fixation plate and a regulation device for the regulation of the recycle and outlet ratio
c. a T-piece is placed in the discharge pipe which is thus connected to
d. an outlet ( above the filter material )
e. means for regulating the distance between the fixation and the regulation plate

3. A mini trickling filter in a closed prefabricated concrete, plastic or steel tank, with filter material, a supporting drain floor for this filter material, where a recirculation device is provided consists of a central in the surrounding filter material placed tube in which an immersion pump is installed and equipped with the discharge pipe, fixation plate and regulation plate with regulation device for the regulation of the recycle and outlet ratio, with following features:
a. that the discharge pipe is placed within the tube
b. towards a fixation plate and a regulation device for the regulation of the recycle and outlet ratio
c. a T-piece is placed in the discharge pipe which is thus connected to
d. an outlet ( above the filter material )
e. means for regulating the distance between the fixation and the regulation plate.

4. Application of the mini trickling filter in accordance with claim 1 (or 3) for the aerobic treatment of biological degradable waste water of individual houses, small industrial plants or other sources of biological degradable wastewater.

5. Application of the mini trickling filter in accordance with claim 1 (or 3) for the aerobic treatment of liquor from manure of farms.

6. Application of the mini trickling filter with the recirculation device in accordance with claim (or 3) for the treatment of biological degradable wastewater of individual houses, small industrial plants or other sources of biological degradable wastewater.

7. Application of the mini circular trickling filter with the recirculation device in accordance with claim 1 (or 3) for the aerobic treatment of liquor from manure of farms.

8. A trickling filter in accordance with claim 1 (or 3) whereby the tube is provided with immersion pump, discharge pipe fixation plate and regulation plate with regulation device for the regulation of the recycle and outlet ratio in general.

## Revendications

1. Un filtre bactérien aérobie, installé dans un réservoir clos en béton préfabriqué, plastique ou acier, avec un matériau filtrant, un support drainant pour ce matériau filtrant, où un système de recirculation est prévu, et constitué d'un tube placé au centre du matériau filtrant et dans la quelle une pompe immergée est montée.

2. Un filtre en concordance avec revendication 1, où le tube est prévu d'une pompe immergée, d'un tuyau de refoulement, une plaque fixe et une plaque de régulation avec système de régulation fixation plate pour la régulation du taux de recirculation et le débit de sortie avec les caractéristiques suivantes:
a. que le tuyau de refoulement est placé dans le tube
b. envers une plaque de fixation et un système de régulation pour la régulation du taux de recirculation et du débit de sortie
c. une pièce T est placée dans le tuyau de refoulement qui est ainsi raccordée
d. à la sortie ( au-dessus du matériau filtrant )
e. moyens de réguler la distance entre la plaque fixe et la plaque de régulation

3. Un filtre bactérien aérobie, installé dans un réservoir clos en béton préfabriqué, plastique ou acier, avec un matériau filtrant, un support drainant pour ce matériau filtrant, où un système de recirculation est prévu, et constitué d'un tube placé au centre du matériau filtrant et dans la quelle une pompe immergée est montée et d'un tuyau de refoulement, une plaque fixe et une plaque de régulation avec système de régulation fixation plate pour la régulation du taux de recirculation et le débit de sortie avec les caractéristiques suivantes:
a. que le tuyau de refoulement est placé dans le tube
b. envers une plaque de fixation et un système de régulation pour la régulation du taux de recirculation et du débit de sortie
c. une pièce T est placée dans le tuyau de refoulement qui est ainsi raccordée
d. à la sortie ( au-dessus du matériau filtrant )
e. moyens de réguler la distance entre la plaque fixe et la plaque de régulation.

4. Application d'un filtre bactérien aérobie en concordance avec revendication 1 (ou 3) pour le traitement aérobie des eaux résiduaires biodégradables de maisons individuelles, petites industries ou d'autres sources d'eaux résiduaires biodégradables.

5. Application d'un filtre bactérien aérobie en concordance avec revendication 1 (ou 3) pour le traitement aérobie pour le traitement du lisier des fermiers.

6. Application d'un filtre bactérien aérobie en concordance avec revendication 1 (ou 3) avec système de recirculation pour le traitement aérobie des eaux résiduaires biodégradables de maisons individuelles, petites industries ou d'autres sources d'eaux résiduaires biodégradables.

7. Application d'un filtre bactérien aérobie en concordance avec revendication 1 (ou 3) avec système de recirculation pour le traitement aérobie du lisier des fermiers.

8. Un filtre bactérien aérobie en concordance avec revendication 1 (or 3) où le tube est prévu d'une pompe immergée, d'un tuyau de refoulement, une plaque fixe et une plaque de régulation avec système de régulation fixation plate pour la régulation du taux de recirculation et le débit de sortie en général.

## Patentansprüche

1. Ein Tropfkörper in einem geschlossenen vorgefertigden Behälter aus Beton, Kunststoff oder Stahl, mit Füllkörpern Material, ein Understützungboden für diesem Füllkörpern Material, wohin ein Rezirkulationsystem ist vorgesehen und dass besteht aus einem zentral in Füllkörpern Material geplatzten Rohr und wohin eine Tauchpumpe ist aufgestellt.

2. Ein Tropfkörper gemäss Anspruch 1, wobei ein Rohr ist vorgesehen mit Tauchpumpe, Druckleitung, Fixationsplatte und Regelplatte mit Regulationssystem für dass regeln von der Rezirkulationsmenge und der Abflussmenge, mit folgenden Kennzeichen:
a. dass die Druckleitung ist aufgestellt in dem Rohr
b. gegenüber einer Fixationsplatte und Regelplatte mit Regulationssystem für dass regeln von der Rezirculationsmenge und der Abflussmenge
c. ein T- stuck ist vorgesehen in der Druckleiting und ist verbunden mit
d. dem Ablauf ( oben dem Füllkörpern Material )
e. mittels Regulierung von Abstand zwischen Fixationsplatte und Regelplatte

3. Ein Tropfkörper in einem geschlossenen vorgefertigden Behälter aus Beton, Kunststoff oder Stahl, mit Füllkörpern Material, ein Understützungboden für diesem Füllkörpern Material, wohin ein Rezirkulationsystem ist vorgesehen und dass besteht aus einem zentral in Füllkörpern Material geplatzten Rohr und wohin eine Tauchpumpe ist aufgestellt und ausgerüstet mit eine Druckleitung, Fixationsplatte und Regelplatte mit Regulationssystem für dass regeln von der Rezirkulationsmenge und der Abflussmenge, mit folgenden Kennzeichen:
a. dass die Druckleitung ist aufgestellt in dem Rohr
b. gegenüber einer Fixationsplatte und Regelplatte mit Regulationssystem für dass Regeln von der Rezirculationsmenge und der Abflussmenge
c. ein T- stuck ist vorgesehen in der Druckleiting und ist verbunden mit
d. dem Ablauf ( oben dem Füllkörpern Material )
e. mittels Regulierung von Abstand zwischen Fixationsplatte und Regelplatte

4. Anwendung von dem Tropfkörper gemäss Anspruch 1 (oder 3) für der biologische Reinigung von biologischen abbaubaren Abwasser von privaten Hausen, kleine Gewerben oder anderen Quellen von biologischen abbaubaren Abwasser.

5. Anwendung von dem Tropfkörper gemäss Anspruch 1 (oder 3) für der biologische Reinigung von Dünger von Bauernhofen.

6. Anwendung von dem Tropfkörper gemäss Anspruch 1 (oder 3) mit Rezirkulationsystem für der biologische Reinigung von biologischen abbaubaren Abwasser von privaten Hausen, kleine Gewerben oder anderen Quellen von biologischen abbaubaren Abwasser.

7. Anwendung von dem Tropfkörper gemäss Anspruch 1 (oder 3) mit Rezirkulationsystem für der biologische Reinigung von Dünger von Bauernhofen.

8. Anwendung von dem Tropfkörper gemäss Anspruch 1 (oder 3) wobei ein Rohr ist vorgesehen mit Tauchpumpe, Druckleitung, Fixationsplatte und Regelplatte mit Regulationssystem für das regeln von der Rezirkulationsmenge und der Abflussmenge im allgemeinen.
